# EUROPEAN PATENT SPECIFICATION

(11) **EP 2 186 658 B1**
(45) Date of publication and mention of the grant of the patent: **04.07.2012**
(21) Application number: 09175902.7
(22) Date of filing: 13.11.2009
(51) Int. Cl.: B60C 23/04

(54) **Tire and electronic device assembly and method of embedding an electronic device in a tire**
Reifen und Anordnung einer elektronischen Vorrichtung sowie Verfahren zur Einbettung einer elektronischen Vorrichtung in einen Reifen
Pneu et ensemble de dispositif électronique et procédé d'intégration d'un dispositif électronique dans un pneu

(30) Priority: 18.11.2008 US 272881; 18.11.2008 US 272877
(43) Date of publication of application: 19.05.2010
(73) Proprietor: The Goodyear Tire & Rubber Company, Akron, OH 44316-0001 (US)
(72) Inventor: Lionetti, Robert Edward, L-7227, Bereldange (LU); Alie, Jean-Claude, B-6650, Bastogne (BE); Tubb, Gary Edwin, Copley, OH 44321 (US)
(74) Representative: Kutsch, Bernd

(56) References cited:
- EP-A- 0 505 905
- EP-A- 1 870 262
- EP-A- 1 942 445

## Description

### Field of the Invention

The invention relates generally to the incorporation of an electronic device in a tire and, more specifically, to a tire having an embedded radio frequency identification tag.

### Background of the Invention

Incorporation of an RFID tag into a tire can occur during tire construction and before vulcanization or in a post-cure procedure. Such tags have utility in transmitting tire-specific identification data to an external reader. UHF (ultra-high frequency) tags are typically small and utilize flexible antennas for the transmission of data. When embedded into a tire, such as during tire construction, the device represents a foreign object that can affect the structural integrity of the tire. UHF RFID tags, therefore, not only do not serve to reinforce the tire structure but may, in fact, act to degrade the tire in the embedded tag region.

Many locations within a tire are not suitable for placing an RFID tag because of cyclical flexural bending in service or because the location does not permit suitable radio frequency compatibility for reading applications. Accordingly, there remains a need for a tire having a UHF RFID tag embedded therein in a manner that does not degrade the performance or durability of the tire, is mechanically suitable and durable in service, provides suitable radio frequency reading capability, and is capable of efficient incorporation into the tire manufacturing process.

EP-A- 0 505 905 describes an integrated circuit transponder with a coil antenna in a pneumatic tire for use in tire identification. A transponder tag may be either located on the axially inner side of a tire ply between this ply and the apex, on the axially inner side of the ply and a chipper, or within the apex between two apex components close to the bead.

Further tires comprising transponder tags are described in EP-A- 1 942 445 and EP-A- 1 870 262.

### Summary of the Invention

The invention relates to a tire and electronic device assembly according to claim 1 and to a method according to claim 9.

Dependent claims refer to preferred embodiments of the invention. According to a preferred aspect of the invention, the tire is constructed having a pair of beads, at least one ply layer having a plurality of parallel cords extending from one bead to an opposite bead and a ply ending wrapped around the one bead. The tire further includes an outer sidewall, an apex component positioned above the one bead and extending upward to an apex component end, and a chafer component wrapped around the one bead and extending upward to a chafer component end. The assembly includes an electronic device in which a transponder tag, preferably a RFID transponder tag, is coupled to a dipole antenna formed by first and second elongate antenna segments.

Pursuant to a further preferred aspect of the invention, the transponder tag and at least a portion of the dipole antenna is at least partially embedded within a compound having compatible permittivity and conductivity with operation of the dipole antenna.

In another aspect of the invention, the electronic device is mounted to the tire apex in a position between the tire apex and the tire sidewall at a predetermined distance above an ending of the tire ply and in an orientation placing a longitudinal axis of the dipole antenna perpendicular to the cords of the tire ply.

The electronic device may further be positioned between the tire chafer ending and the tire apex ending and above an ending of the tire ply a distance of at least 10 mm.

### Definitions

"Axial" and "axially" means lines or directions that are parallel to the axis of rotation of the tire.

"Circumferential" means lines or directions extending along the perimeter of the surface of the annular tread perpendicular to the axial direction.

"Equatorial Centerplane (EP)" means the plane perpendicular to the tire's axis of rotation and passing through the center of the tread.

"Inboard side" means the side of the tire nearest the vehicle when the tire is mounted on a wheel and the wheel is mounted on the vehicle.

"Lateral" means an axial direction.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"Substantially perpendicular" or "substantially parallel" means "perpendicular" or "parallel" respectively with a deviation from the perpendicular or parallel direction respectively of less than +/- 5 degress, preferably less than +/-3 degrees.

### Brief Description of the Drawings

The invention will be described by way of example and with reference to the accompanying drawings in which:
FIG. 1 is a side elevational view of the electronic device;
FIG. 2 is a top plan view of the electronic device showing in phantom the coverage area of a compound spray;
FIG. 3 is a perspective view of the electronic device;
FIG. 4 is a top perspective view of the electronic device;
FIG. 5 is a top perspective view of the electronic device shown in the process of receiving a selective compound coating;
FIG. 6 is a top perspective view of the coated electronic device shown subsequent to the coating operation of FIG. 5;
FIG. 7A is a sectional perspective view of a partial tire having an electronic device mounted in a sidewall location;
FIG. 7B is a sectional perspective view of a partial tire having an electronic device mounted at an alternative position;
FIG. 8 is a cross sectional view of a tire having an electronic device mounted thereto;
FIG. 9A is a section view of the electronic device shown in FIG. 7A; and
FIG. 9B is a section view of the electronic device shown in FIG. 7-B.

### Detailed Description of the Invention

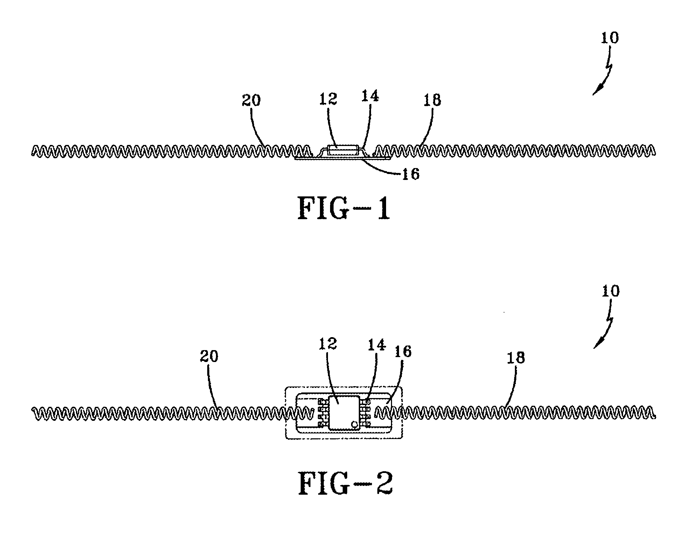

With initial reference to the exemplary embodiment shown in FIGS. 1,2, 3, and 4, an electronic device 10 is shown to include a preferably RFID transponder tag 12 having interface contacts 14 mounted to a substrate 16. The RFID transponder tag12 is of a type providing for the electronic memory storage of data and the communication of such data to an external reader (not shown). The transponder tag 12 may utilize UHF frequencies in the transmission of the data to the external reader. Coupled to the transponder tag 12 is a dipole antenna formed by or comprising two elongate antennas 18, 20 connected by suitable means such as welding to the contacts 14. The antennas 18, 20 are preferably but not necessary formed as elongate coils. The term "antenna" as used herein refers to any suitable antenna configuration functional for the intended application including, but not limited to, the dipole antenna formed by the antenna segments 18, 20.

The device 10 is intended to be embedded within a tire as will be explained, preferably although not necessarily during tire construction and before vulcanization. Although the size of the device 10 is relatively small and the antenna 18, 20 is flexible, the device 10 nonetheless represents a foreign object within a host tire. As with any foreign object, the device 10 therefore does not reinforce the tire structure but rather represents a structural anomaly that may impact the performance of the tire. Conversely, the environment of a tire in use may be harmful or inhospitable to the survival and performance of the device 12. Thus, for the intended purpose of the invention, maintaining the structural of a host tire and the electronic device in a manner that will allow the transponder/tag to transmit information as necessary is desired.

The subject tire and electronic device assembly 10 locates and orients the device 12 into a tire in a manner that does not degrade the performance or durability of the tire; is mechanically suitable for tag durability in service; and provides a suitable radio frequency compatible environment for sundry reading applications. In addition, the assembly 10 may be created seamlessly and at an efficient relatively low cost in the tire manufacturing process.

As shown in FIGS. 1-6, the electronic device 12 is embedded by an applicator 22 in a suitable compound 24 that has compatible permittivity and conductivity to not interfere with the antenna performance. In addition to the radio frequency compatibility, the compound 24 preferably will have physical properties that are suitable in the environment of surrounding tire components. The compound 24 preferably will provide smooth transition from the rigid electronic device 12 and antenna 18, 20 to the neighboring tire components. For example, the material stiffness and hysterisis must not create unwanted stress concentration or heat build up to not impact the tire performance. The encapsulating compound must also have suitable adhesion to surrounding tire components and to the components of the tag assembly 10. Material 24 meeting the above criteria is commercially available.

The material 24 encapsulates selective portions of the electronic device 12 as shown. Preferably, the compound 24 by a rotation of the electronic device 12 in the shown direction 26 will encapsulate the RFID device 12, contacts 14, and the substrate 16 as well as at least the portions of antenna coils 18, 20 that connect to the contacts 14. Preferably the remote end segments of the antenna segments 18, 20 will remain uncoated; however, the entirety of the segments 18, 20 may be coated if desired.

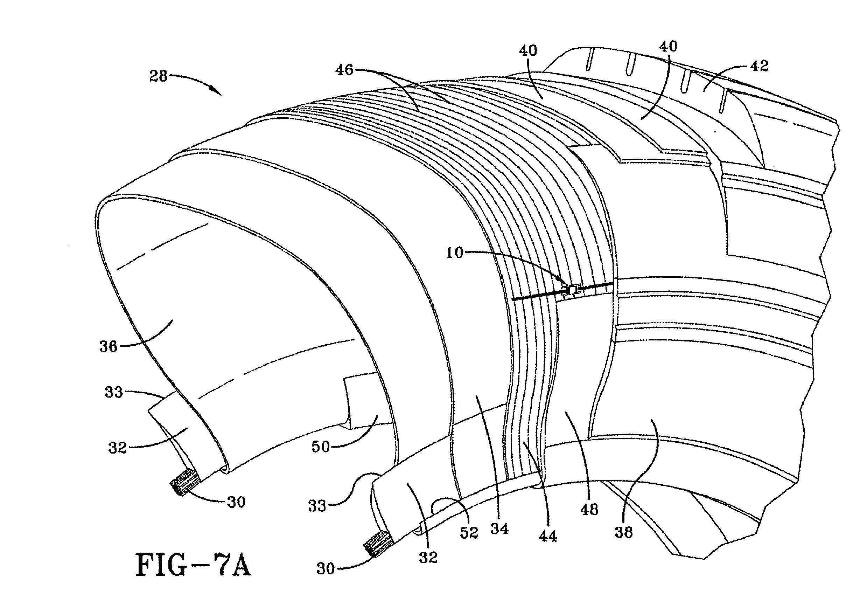

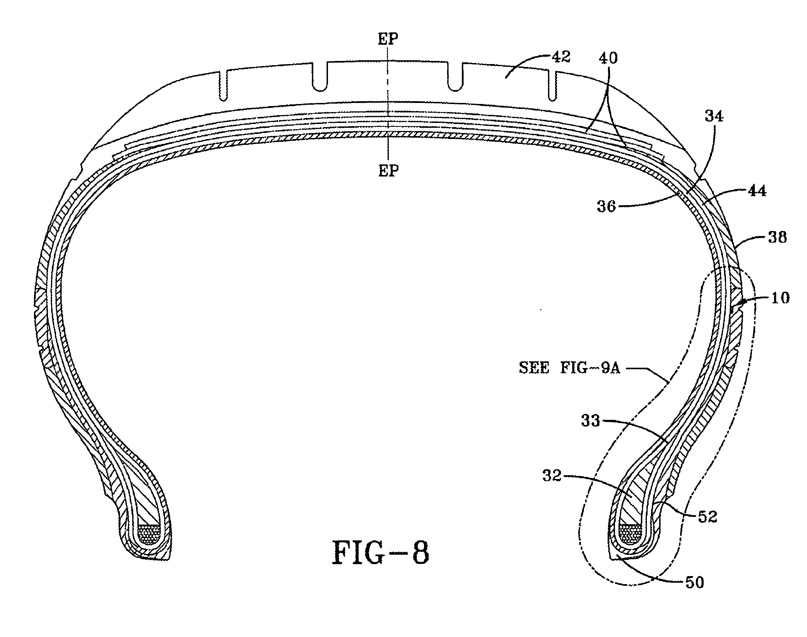

Referring to FIGS. 7A, 7B, 8, 9A, and 9B, the coated electronic device 12 is intended for incorporation into a tire 28 of generally conventional construction. The invention may be employed in tires suitable for any application. The tire 28 includes beads 30 and apexes 32 proximally situated above the beads 30. The apexes 32 constitute a rubber filler that is placed above the beads in an area within the tire where air could otherwise be trapped in its absence. Each of the apexes 32 terminates at a radially outward apex end 33. One or more tire plies 34, 44, an innerliner 36, and sidewalls 38 are further added in the tire build. A belt package 40 may be located beneath the tread 42 at the crown of the tire. The plies 34, 44 constitute layers of rubber-coated cord fabric extending from bead to bead and are turned up around the bead, thereby locking the bead into the assembly or carcass. The parallel cords 46 forming the tire plies may, pursuant to conventional tire construction, be twisted fiber or filament of polyester rayon, nylon, steel, or other material which gives the tire carcass and belts strength. In general, the parallel cords 46 extend from the bead to bead and reinforce the tire.

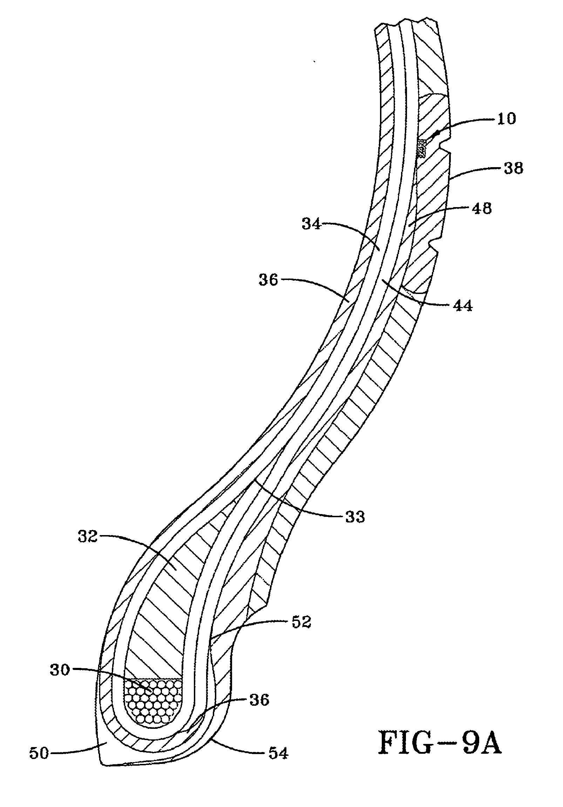

As will be appreciated from conventional tire build techniques, a green tire is constructed component by component. The beads 30 maintain the integrity of the green tire throughout the build process as layer ends are wrapped and turned up around the beads. The ply turnup 48 from the ply 44 wraps under the beads 30 as shown in FIG. 7A and 9A. As explained, each apex 32 is positioned above a respective bead 30 and extends to apex end 33. A chafer component 50 is positioned during the tire build to the outside of the ply turnup and beads 30. The chafer 50 is formed of reinforcing material around the bead in the rim flange area to prevent chafing of the tire by the rim parts. The chafer extends to a chafer end 52. A rim cushion 54 is to the outside of the bead region and the outer tire component is a sidewall 38 extending to the tire tread.

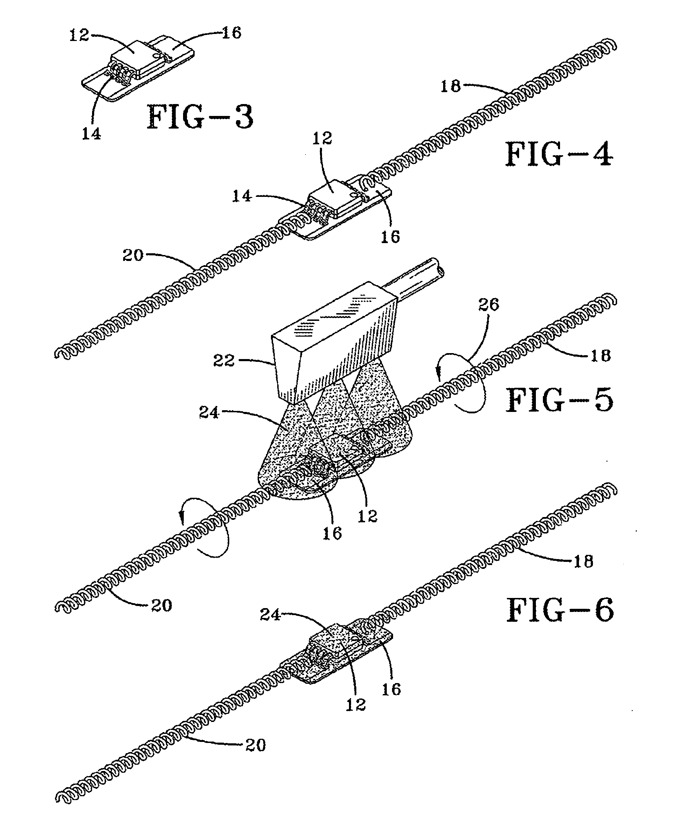

The electronic device 12, subsequent to the coating operation shown in FIGS. 4-6, is preferably introduced into the tire during the green tire build operation. As shown in FIGS. 7A and 9A, the device 12 may be located at a sidewall location between the ply 44 and the sidewall 38. The device 12 is affixed to the ply layer by suitable known techniques such as the use of adhesive. The device 12 is oriented relative to the tire 28 such that the tag antenna 18, 20 extends perpendicular to the circumferentially extending ply layers. In particular, for steel reinforced ply tires, the tag antenna 18, 20 extends perpendicular to the ply cords. Embedding the device 12 in such an orientation utilizes the perpendicularly extending cords of the ply behind the device 12 to provide structural support and reinforcement. While the antenna 18, 20 in the device 12 is flexible, it is nonetheless desirable to limit the degree of flexure in the antenna to maintain the integrity of the antenna segments and their connection to the contacts 14 of the device 12. Orienting the antenna segments perpendicular to the ply cords thus minimizes flexure in the antenna 18, 20 during the life of the tire.

While the location of the tag assembly as shown in FIGS. 7A and 9A is advantageous in achieving a good reading from the tag by a remote reader, the sidewall of the tire is a high flexure region in a tire. The flexing that occurs in such a location may cause damage to the tag assembly 10 and the presence of the tag assembly 10 in such a location may tend to cause sidewall fatigue, damage, and/or separation. The tag assembly 10 may as a result have its integrity threatened by the harsh mechanical environment in the sidewall region.

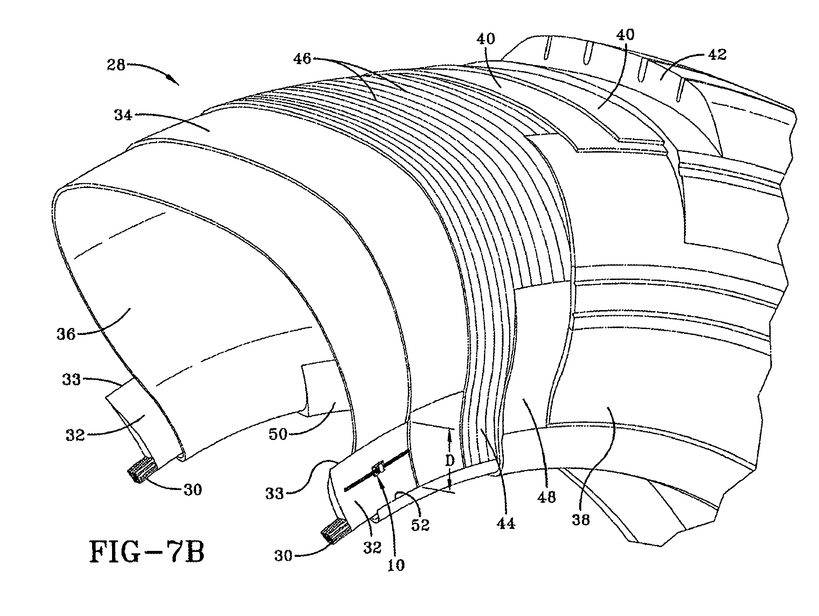

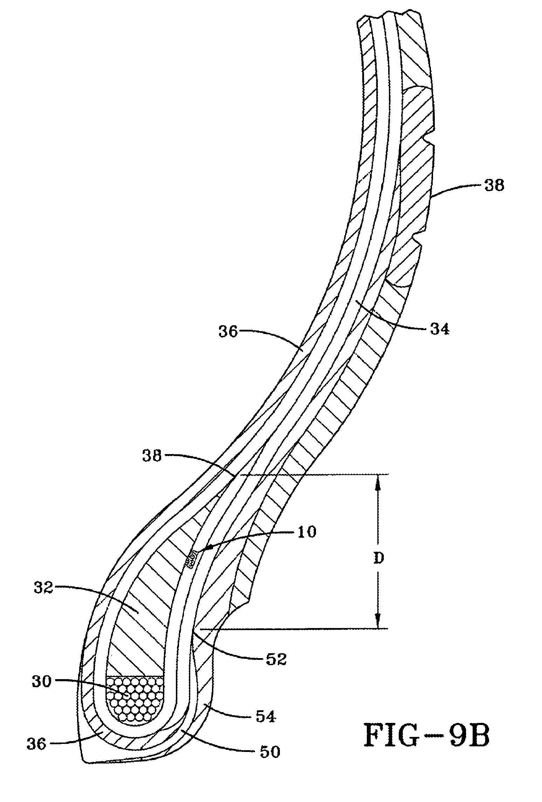

Accordingly, the location of the electronic device 12 within the tire 28 may be moved to the position of FIGS. 7B and 9B. In this location, the device 12 is positioned in a region between the tire apex 32 and the sidewall 38. As with the tag position of FIGS. 7A and 9A, in the position of FIGS. 7B and 9B, the antenna is placed perpendicular to the ply cords and the longitudinal axis of the device is above the ply ending 48. It is preferred that the spacing between the axis of the device and the ply ending 48 be a minimum of 10 mm. It is further preferred although not necessary that the device 12 be located in the region between the chafer ending 52 and the apex ending 33. The distance "D" in FIG. 9B shows the region between the chafer ending and the apex ending. The device 12 is optimally embedded during the tire build operation. It is further preferred although not necessary that the device 12 be attached by suitable means such as adhesive directly to the apex. Affixation of the device 12 to the apex serves to protect the device from geometry changes associated with circumference changes from the building drum during tire build formation.

The location of FIGS. 7B and 9B is preferred although not necessary because the device 12 in such a location is positioned to provide good transmission to the remote reader while remaining protected from the mechanical service environment of the tire. The location against the apex and between apex and chafer endings will minimize the potential for sidewall fatigue, damage, and/or separation. So positioned, the device is further in a relatively stable and non-flexing region of the tire that will minimize the potential for tag damage or antenna malfunction.

From the foregoing, it will be appreciated that the invention satisfies the need for a tire and electronic device assembly that incorporates a device such as a UHF RFID tag into a tire in a manner that does not degrade the performance or durability of the tire, is mechanically suitable and durable in service, provides suitable radio frequency reading capability, and is capable of efficient incorporation into the tire manufacturing process. The tire and electronic device assembly includes a compound 24 having compatible permittivity and conductivity with the operation of a dipole antenna 18, 20. At least a portion of the dipole antenna is embedded within the compound. The device 12 is oriented to place a longitudinal axis of the dipole antenna 18, 20 perpendicular to cords 46 of a tire ply 44 in an uncured tire 28. The device 12 is preferably located between a tire apex 32 and a tire sidewall 38 of the uncured tire, at a predetermined distance "D" above an ending 48 of the tire ply. This preferred position of the device 12 is between a tire chafer ending and a tire apex preferably ending at a distance of at least 10 mm from an edge of the ply turnup ending. It is further preferred that the device 12 be attached to the tire apex 32 to thereby benefit from the geometric stability of that tire region and to take advantage of the reinforcement and support provided by the apex. Partially encapsulated, such as shown in FIGS. 4-6, the antenna segments 18, 20 have remote end segments that project compound-free.

## Claims

1. A tire and electronic device assembly; the tire (28) having a pair of beads (30), at least one ply layer (44) having a plurality of parallel cords (46) extending from one bead (30) to an opposite bead (30), the at least one ply layer (34, 44) further having a ply ending (48) wrapped around one bead (30), a sidewall (38), an apex component (32) positioned above the one bead (30) and extending upward to an apex component end (33), and a chafer component (50) wrapped around the one bead (30) and extending upward to a chafer component end (52); the assembly (10) comprising an electronic device (12) including a transponder tag, a dipole antenna formed by first and second elongate antenna segments (18, 20) electrically coupled at inward ends to the transponder tag and extending in opposite respective directions from the transponder tag, and a compound (24) having compatible permittivity and conductivity with operation of the dipole antenna, the transponder device (12) and at least a portion of the dipole antenna being at least partially embedded within the compound (24); wherein the transponder tag is operably mounted to the tire (28) in an orientation placing a longitudinal axis of the dipole antenna perpendicular or substantially perpendicular to the parallel cords (46), wherein the transponder tag is operably mounted to the tire (28) in a position
(i) between the apex component (32) and the sidewall (38) and radially between the chafer component end (52) and the apex component end (33) at a distance of at least 5 mm from the chafer component end (52), or
(ii) between the apex component (32) and the sidewall (38) and radially above the apex component end (33) at a distance of at least 5 mm from the apex component end (33), or
(iii) radially above the ply ending (48).

2. The assembly of claim 1, wherein the transponder tag is located radially above the ply ending (48) at a distance of at least 5 mm, preferably at least 10 mm, or at a distance in a range of from 10 mm to 40 mm from the ply ending (48).

3. The assembly of at least one of the previous claims, wherein the transponder tag is located radially above the apex component end (33) at a distance of at least 10 mm, or at a distance in a range of from 10 mm to 40 mm from the apex component end (33).

4. The assembly of at least one of the previous claims, wherein the compound (24) encapsulates or substantially encapsulates the transponder tag and the inward ends of the antenna segments (18, 20), and wherein each antenna segment (18, 20) includes a remote end segment extending compound-free.

5. The assembly of at least one of the previous claims, wherein the transponder tag is located radially between the chafer component end (52) and the apex component end (33) at a distance of at least 10 mm, or at a distance in a range of from 10 mm to 40 mm from the chafer component end (52).

6. The assembly of one of the previous claims, wherein the transponder tag is mounted to the apex component (32).

7. The assembly of at least one of the previous claims, wherein the antenna segments (18, 20) extend circumferentially in parallel or at least substantially in parallel with the apex component end (33).

8. The assembly of at least one of the previous claims, wherein the antenna segments (18, 20) extend circumferentially in parallel or at least substantially in parallel with the ply ending (48).

9. A method for embedding a tag assembly in a tire, the tag assembly having a flexible dipole antenna coupled to a transponder device (12), the method comprising:
selecting a compound (24) having compatible permittivity and conductivity with operation of the dipole antenna;
at least partially embedding the transponder device (12) and at least a portion of the dipole antenna within the compound (24);
orienting the tag assembly to place a longitudinal axis of the dipole antenna perpendicular or at least substantially perpendicular to parallel cords (46) of a ply (44) in an uncured tire; and
placing the tag assembly
(i) between a tire apex component (32) and a tire sidewall (38) and radially between a tire chafer component end (52) and the tire apex component end (33) at a distance of at least 5 mm from the tire chafer component end (52), or
(ii) between the apex component (32) and the sidewall (38) and radially above a tire apex component end (33) at a distance of at least 5 mm from the tire apex component end (33), or
(iii) in a position radially above a tire ply ending (48).

10. The method of claim 9, wherein the tag is placed radially between the tire chafer component end (52) and the apex component end (33).

11. The method of claim 9 or 10, wherein the tag is placed above the tire ply ending (48) radially at a distance of at least 5 mm, preferably at least 10 mm, or at a distance in a range of from 10 mm to 40 mm from the ply ending (48).

12. The method of at least one of the claims 9-11, further including encapsulating or substantially encapsulating the transponder device (12) and coupled ends of the dipole antenna in the compound (24), and extending from the encapsulated dipole coupled ends compound-free dipole end segments.

13. The method of at least one of the claims 9-12, further including positioning the tag radially between a chafer component end (52) and the apex component end (33) at a distance of at least 5 mm, preferably at least 10 mm, or at a distance in a range of from 10 mm to 40 mm from the chafer component end (52).

14. The method of at least one of the claims 9-13, wherein the tag is mounted to the apex component (32).

15. The method of at least one of the claims 9-14, further including curing the uncured tire wherein the tag is mounted to the apex component (32).

## Patentansprüche

1. Reifen und Elektronikvorrichtungsanordnung; wobei der Reifen (28) ein Paar Wülste (30) aufweist, mindestens eine Karkassenlagenschicht (44) mit einer Vielzahl von parallelen Korden (46), die sich von einem Wulst (30) zu einem gegenüberliegenden Wulst (30) erstrecken, wobei die mindestens eine Karkassenlagenschicht (34, 44) weiter ein Karkassenlagenende (48) aufweist, das um einen Wulst (30) herumgeschlagen ist, eine Seitenwand (38), ein Kernprofilbauteil (32), das über dem einen Wulst (30) positioniert ist und sich aufwärts bis zu einem Kernprofilbauteilende (33) erstreckt, und ein Wulstschutzstreifenbauteil (50), das um den einen Wulst (30) herumgeschlagen ist und sich aufwärts bis zu einem Wulstschutzstreifenbauteilende (52) erstreckt; wobei die Anordnung (10) eine Elektronikvorrichtung (12) umfasst, die einen Transponder-Tag, eine Dipolantenne, gebildet durch ein erstes und zweites längliches Antennensegment (18, 20), die an einwärts gerichteten Enden elektrisch an den Transponder-Tag gekoppelt sind und sich von dem Transponder-Tag in jeweilige entgegengesetzte Richtungen erstrecken, und eine Mischung (24) mit kompatibler Permittivität und Leitfähigkeit mit dem Betrieb der Dipolantenne beinhaltet, wobei die Transpondervorrichtung (12) und mindestens ein Teil der Dipolantenne mindestens teilweise in der Mischung (24) eingebettet sind; wobei der Transponder-Tag betriebsfähig an dem Reifen (28) montiert ist, in einer Orientierung, welche eine Längsachse der Dipolantenne lotrecht oder im Wesentlichen lotrecht zu den parallelen Korden (46) anordnet, wobei der Transponder-Tag betriebsfähig an dem Reifen (28) montiert ist, in einer Position
(i) zwischen dem Kernprofilbauteil (32) und der Seitenwand (38) und radial zwischen dem Wulstschutzstreifenbauteilende (52) und dem Kernprofilbauteilende (33) in einem Abstand von mindestens 5 mm von dem Wulstschutzstreifenbauteilende (52), oder
(ii) zwischen dem Kernprofilbauteil (32) und der Seitenwand (38) und radial über dem Kernprofilbauteilende (33) in einem Abstand von mindestens 5 mm von dem Kernprofilbauteilende (33), oder
(iii) radial über dem Karkassenlagenende (48).

2. Anordnung nach Anspruch 1, wobei der Transponder-Tag sich radial über dem Karkassenlagenende (48) in einem Abstand von mindestens 5 mm, bevorzugt mindestens 10 mm, oder in einem Abstand in einem Bereich von 10 mm bis 40 mm von dem Karkassenlagenende (48) befindet.

3. Anordnung nach mindestens einem der vorgenannten Ansprüche, wobei der Transponder-Tag sich radial über dem Kernprofilbauteilende (33) in einem Abstand von mindestens 10 mm, oder in einem Abstand in einem Bereich von 10 mm bis 40 mm von dem Kernprofilbauteilende (33) befindet.

4. Anordnung nach mindestens einem der vorgenannten Ansprüche, wobei die Mischung (24) den Transponder-Tag und die einwärts gerichteten Enden der Antennensegmente (18, 20) einkapselt oder im Wesentlichen einkapselt, und wobei jedes Antennensegment (18, 20) ein abgewandtes Endsegment beinhaltet, das sich mischungsfrei erstreckt.

5. Anordnung nach mindestens einem der vorgenannten Ansprüche, wobei der Transponder-Tag sich radial zwischen dem Wulstschutzstreifenbauteilende (52) und dem Kernprofilbauteilende (33) in einem Abstand von mindestens 10 mm, oder in einem Abstand in einem Bereich von 10 mm bis 40 mm von dem Wulstschutzstreifenbauteilende (52) befindet.

6. Anordnung nach einem der vorgenannten Ansprüche, wobei der Transponder-Tag an dem Kernprofilbauteil (32) montiert ist.

7. Anordnung nach mindestens einem der vorgenannten Ansprüche, wobei die Antennensegmente (18, 20) sich in Umfangsrichtung parallel oder mindestens im Wesentlichen parallel zu dem Kernprofilbauteilende (33) erstrecken.

8. Anordnung nach mindestens einem der vorgenannten Ansprüche, wobei die Antennensegmente (18, 20) sich in Umfangsrichtung parallel oder mindestens im Wesentlichen parallel zu dem Karkassenlagenende (48) erstrecken.

9. Verfahren zum Einbetten einer Tag-Anordnung in einen Reifen, wobei die Tag-Anordnung eine an eine Transpondervorrichtung (12) gekoppelte flexible Dipolantenne aufweist, wobei das Verfahren umfasst:
Auswählen einer Mischung (24) mit kompatibler Permittivität und Leitfähigkeit mit dem Betrieb der Dipolantenne;
mindestens teilweise Einbetten der Transpondervorrichtung (12) und mindestens eines Teils der Dipolantenne in der Mischung (24);
Orientieren der Tag-Anordnung, um eine Längsachse der Dipolantenne lotrecht oder mindestens im Wesentlichen lotrecht zu parallelen Korden (46) einer Karkassenlage (44) in einem unvulkanisierten Reifen zu platzieren; und
Platzieren der Tag-Anordnung
(i) zwischen einem Reifenkernprofilbauteil (32) und einer Reifenseitenwand (38) und radial zwischen einem Reifenwulstschutzstreifenbauteilende (52) und dem Reifenkernprofilbauteilende (33) in einem Abstand von mindestens 5 mm von dem Reifenwulstschutzstreifenbauteilende (52), oder
(ii) zwischen dem Kernprofilbauteil (32) und der Seitenwand (38) und radial über einem Reifenkernprofilbauteilende (33) in einem Abstand von mindestens 5 mm von dem Reifenkernprofilbauteilende (33), oder
(iii) in einer Position radial über einem Reifenkarkassenlagenende (48).

10. Verfahren nach Anspruch 9, wobei der Tag radial zwischen dem Reifenwulstschutzstreifenbauteilende (52) und dem Kernprofilbauteilende (33) platziert wird.

11. Verfahren nach Anspruch 9 oder 10, wobei der Tag in einem Abstand von mindestens 5 mm, bevorzugt mindestens 10 mm, oder in einem Abstand in einem Bereich von 10 mm bis 40 mm von dem Karkassenlagenende (48), radial über dem Karkassenlagenende (48) platziert wird.

12. Verfahren nach mindestens einem der Ansprüche 9-11, weiter das Einkapseln oder im Wesentlichen Einkapseln der Transpondervorrichtung (12) und gekoppelten Enden der Dipolantenne in der Mischung (24) und das Erstrecken mischungsfreier Dipolendsegmente von den eingekapselten gekoppelten Dipolenden beinhaltend.

13. Verfahren nach mindestens einem der Ansprüche 9-12, weiter das Positionieren des Tags radial zwischen einem Wulstschutzstreifenbauteilende (52) und dem Kernprofilbauteilende (33) in einem Abstand von mindestens 5 mm, bevorzugt mindestens 10 mm, oder in einem Abstand in einem Bereich von 10 mm bis 40 mm von dem Wulstschutzstreifenbauteilende (52) beinhaltend.

14. Verfahren nach mindestens einem der Ansprüche 9-13, wobei der Tag an dem Kernprofilbauteil (32) montiert wird.

15. Verfahren nach mindestens einem der Ansprüche 9-14, weiter das Vulkanisieren des unvulkanisierten Reifens, wobei der Tag an dem Kernprofilbauteil (32) montiert ist, beinhaltend.

## Revendications

1. Assemblage de bandage pneumatique et de dispositif électronique, le bandage pneumatique (28) possédant une paire de talons (30), au moins un pli (44) possédant plusieurs câblés parallèles (46) qui s'étendent d'un talon (30) au talon opposé (30), ledit au moins un pli (34, 44) possédant en outre une extrémité de pli (48) qui vient s'enrouler autour d'un talon (30), un flanc (38), un composant (32) faisant office de bourrage sur tringle disposé au-dessus du premier talon (30) et s'étendant vers le haut jusqu'à une extrémité (33) du composant faisant office de bourrage sur tringle, et un composant (50) faisant office de bandelette talon qui vient s'enrouler autour du premier talon et qui s'étend vers le haut jusqu'à l'extrémité (52) du composant faisant office de bandelette talon ; dans lequel l'assemblage (10) comprend un dispositif électronique (12) englobant une radio-étiquette, une antenne dipôle formée par un premier et un deuxième segment d'antenne allongé (18, 20) couplée électriquement à ses extrémités internes à la radio-étiquette et s'étendant dans des directions opposées respectives à partir de la radio-étiquette, et un composé (24) possédant une permittivité et une conductivité compatibles avec le fonctionnement de l'antenne dipôle, le dispositif (12) faisant office de transpondeur et au moins une portion de l'antenne dipôle étant enrobés au moins en partie dans le composé (24) ; dans lequel la radio-étiquette est montée de manière opérationnelle sur le bandage pneumatique (28) dans une orientation qui place l'axe longitudinal de l'antenne dipôle perpendiculairement ou essentiellement perpendiculairement aux câblés parallèles (46) ; dans lequel la radio-étiquette est montée de manière opérationnelle sur le bandage pneumatique (28) dans une position :
(i) située entre le composant (32) faisant office de bourrage sur tringle et le flanc (38) et, en direction radiale, entre l'extrémité (52) du composé faisant office de bandelette talon et l'extrémité (33) du composant faisant office de bourrage sur tringle à une distance d'au moins 5 mm par rapport à l'extrémité (52) du composant faisant office de bandelette talon ; ou
(ii) située entre le composant (32) faisant office de bourrage sur tringle et le flanc (38) et, en direction radiale, au-dessus de l'extrémité (33) du composant faisant office de bourrage sur tringle à une distance d'au moins 5 mm par rapport à l'extrémité (33) du composant faisant office de bourrage sur tringle ; ou
(iii) au-dessus de l'extrémité de pli (48), en direction radiale.

2. Assemblage selon la revendication 1, dans lequel la radio-étiquette est disposée, en direction radiale, au-dessus de l'extrémité de pli (48), à une distance d'au moins 5 mm, de préférence d'au moins 10 mm, ou bien à une distance dans la plage de 10 mm à 40 mm par rapport à l'extrémité de pli (48).

3. Assemblage selon au moins une des revendications précédentes, dans lequel la radio-étiquette est disposée en position radiale au-dessus de l'extrémité (33) du composant faisant office de bourrage sur tringle, à une distance d'au moins 10 mm ou bien à une distance dans la plage de 10 mm à 40 mm par rapport à l'extrémité (33) du composant faisant office de bourrage sur tringle.

4. Assemblage selon au moins une des revendications précédentes, dans lequel le composé (24) encapsule ou encapsule de manière substantielle la radio-étiquette et les extrémités internes des segments d'antenne (18, 20), et dans lequel chaque segment d'antenne (18, 20) englobe un segment terminal éloigné qui s'étend en l'absence de composé.

5. Assemblage selon au moins une des revendications précédentes, dans lequel la radio-étiquette est disposée en direction radiale entre l'extrémité (52) du composant faisant office de bandelette talon et l'extrémité (33) du composant faisant office de bourrage sur tringle, à une distance d'au moins 10 mm ou bien à une distance dans la plage de 10 mm à 40 mm par rapport à l'extrémité (52) du composant faisant office de de bandelette talon.

6. Assemblage selon au moins une des revendications précédentes, dans lequel la radio-étiquette est montée sur le composant (32) faisant office de bourrage sur tringle.

7. Assemblage selon au moins une des revendications précédentes, dans lequel les segments d'antenne (18, 20) s'étendent en direction circonférentielle parallèlement ou de manière moins substantielle parallèlement à l'extrémité (33) du composant faisant office de bourrage sur tringle.

8. Assemblage selon au moins une des revendications précédentes, dans lequel les segments d'antenne (18, 20) s'étendent en direction circonférentielle parallèlement ou au moins de manière substantielle parallèlement à l'extrémité de pli (48).

9. Procédé pour enrober un assemblage d'étiquette dans un bandage pneumatique, l'assemblage d'étiquette possédant une antenne dipôle flexible couplée à un dispositif (12) faisant office de transpondeur, le procédé comprenant le fait de :
sélectionner un composé (24) possédant une permittivité et une conductivité compatibles avec le fonctionnement de l'antenne dipôle ;
enrober au moins en partie le dispositif (12) faisant office de transpondeur et au moins une portion de l'antenne dipôle dans le composé (24) ;
orienter l'assemblage d'étiquette pour placer l'axe longitudinal de l'antenne dipôle perpendiculairement ou au moins de manière substantielle perpendiculairement aux câblés parallèles (46) d'un pli (44) dans un bandage pneumatique non vulcanisé ; et
placer l'assemblage d'étiquette dans une position
(i) située entre le composant (32) faisant office de bourrage sur tringle et le flanc (38) et, en direction radiale, entre l'extrémité (52) du composé faisant office de bandelette talon et l'extrémité (33) du composant faisant office de bourrage sur tringle à une distance d'au moins 5 mm par rapport à l'extrémité (52) du composant faisant office de bandelette talon ; ou
(ii) située entre le composant (32) faisant office de bourrage sur tringle et le flanc (38) et, en direction radiale, au-dessus de l'extrémité (33) du composant faisant office de bourrage sur tringle à une distance d'au moins 5 mm par rapport à l'extrémité (33) du composant faisant office de bourrage sur tringle ; ou
(iii) au-dessus de l'extrémité de pli (48), en direction radiale.

10. Procédé selon la revendication 9, dans lequel l'étiquette est placée en direction radiale entre l'extrémité (52) du composant faisant office de bandelette talon du bandage pneumatique et l'extrémité (33) du composant faisant office de bourrage sur tringle.

11. Procédé selon la revendication 9 ou 10, dans lequel l'étiquette est placée en direction radiale, au-dessus de l'extrémité de pli (48), à une distance d'au moins 5 mm, de préférence d'au moins 10 mm, ou bien à une distance dans la plage de 10 mm à 40 mm par rapport à l'extrémité de pli (48).

12. Procédé selon au moins une des revendications 9 à 11, englobant en outre le fait d'encapsuler ou d'encapsuler de manière substantielle le dispositif (12) faisant office de transpondeur et les extrémités couplées de l'antenne dipôle dans le composé (24), et le fait d'étendre, à partir des extrémités couplées de l'antenne dipôle encapsulé, des segments terminaux de l'antenne dipôle, exempts de composé.

13. Procédé selon au moins une des revendications 9 à 12, englobant en outre le fait de positionner l'étiquette, en direction radiale, entre l'extrémité (52) du composant faisant office de bandelette talon et l'extrémité (33) du composant faisant office de bourrage sur tringle, à une distance d'au moins 10 mm ou bien à une distance dans la plage de 10 mm à 40 mm par rapport à l'extrémité (52) du composant faisant office de bandelette talon.

14. Procédé selon au moins une des revendications 9 à 13, dans lequel l'étiquette est montée sur le composant (32) faisant office de bourrage sur tringle.

15. Procédé selon au moins une des revendications 9 à 14, englobant en outre le fait de vulcaniser le bandage pneumatique non vulcanisé dans lequel l'étiquette est montée sur le composant (32) faisant office de bourrage sur tringle.
